# EUROPÄISCHE PATENTSCHRIFT

(11) **EP 2 933 671 B1**
(45) Veröffentlichungstag und Bekanntmachung des Hinweises auf die Patenterteilung: **21.10.2020**
(21) Anmeldenummer: 15001095.7
(22) Anmeldetag: 16.04.2015
(51) Int. Cl.: G02B 7/18, G02B 7/183, G02B 17/06

(54) **ROBUSTE STÜTZSTRUKTUR FÜR EIN OPTISCHES SPIEGELTELESKOP**
ROBUST SUPPORT STRUCTURE FOR AN OPTICAL MIRROR TELESCOPE
STRUCTURE DE SUPPORT SOLIDE POUR UN TÉLESCOPE À MIROIR OPTIQUE

(30) Priorität: 19.04.2014 DE 102014005839
(43) Veröffentlichungstag der Anmeldung: 21.10.2015
(73) Patentinhaber: MBDA Deutschland GmbH, 86529 Schrobenhausen (DE)
(72) Erfinder: Klaffert, Thomas, 85356 Freising (DE); Schneider, Michael, 85229 Markt Indersdorf (DE)
(74) Vertreter: Isarpatent

(56) Entgegenhaltungen:
- WO-A1-98/00743
- US-A- 5 058 993

## Beschreibung

Die vorliegende Erfindung betrifft eine Stützstruktur für ein optisches Spiegelteleskop und ein optisches Spiegelteleskop mit einer solchen Stützstruktur. Das Spiegelteleskop ist insbesondere ein hochdynamisch richtbares Off-Axis-Teleskop.

Spiegelteleskope sind Teleskope, die im Wesentlichen reflektive optische Elemente (Spiegel) verwenden. Ein Spiegelteleskop besteht im Wesentlichen aus einem Hauptspiegel und einem im selben Tubus montierten Fangspiegel, die auch als Primär- und Sekundär-Spiegel bezeichnet werden. Im Gegensatz zum Objektiv eines Fernrohrs wird das einfallende Licht nicht gebrochen, sondern vom Primärspiegel reflektiert. Der Tubus bzw. die Stützstruktur ist meist als Rohr- oder Gitterrohrkonstruktion ausgeführt, bei der der Primärspiegel an einem Ende, und der Sekundärspiegel am anderen Ende angeordnet sind.

US 2011/310502 (A1) offenbart ein optisches Raumüberwachungssystem mit einem Primärspiegel, einem Sekundärspiegel, einer Stützbasis und einem optischen Messmittel.

US 5 058 993 (A) offenbart eine optische Bank mit einem Paar Endplatten, die starr durch eine Vielzahl rohrförmiger Verbindungselemente miteinander verbunden sind.

Optische Spiegelteleskope lassen sich prinzipiell entweder als "axiale" oder "außeraxiale Optik", auch "On-Axis-" oder "Off-Axis-Optik" genannt, realisieren. Wesentlicher Unterschied ist hierbei, ob die optischen Achsen der Spiegelflächen mit ihren geometrischen Achsen zusammenfallen (On-Axis) oder nicht (Off-Axis).

In beiden Fällen müssen die Primär und Sekundärspiegel sehr präzise zueinander positioniert werden, so dass einerseits ihre (entweder zentrisch oder außerhalb der Spiegelflächen liegenden) optischen Achsen im Idealfall exakt koaxial ausgerichtet sind und andererseits der eingestellte Fokusabstand möglichst unter allen äußeren Bedingungen invariant sein sollte. Im Falle von Off-Axis-Spiegeln muss darüber hinaus der zu justierende Rollwinkel bezüglich der Längsrichtung des Teleskopes über lange Zeit robust gehalten werden.

Abweichungen von der Koaxialität würden Abbildungsfehler hervorrufen bzw. die Spot-Qualität und den Spot-Radius verschlechtern, Veränderungen des Fokusabstands hätten eine Änderung der Fokussierebene zur Folge. Weiterhin stellen große Teleskopschwenkwinkel im Schwerefeld der Erde in Verbindung mit hohen Richtbeschleunigungen große Herausforderungen an die Masse-Steifigkeitseigenschaften der Stützstruktur, die zugleich hohen thermischen Ansprüchen genügen muss. Die Off-Axis-Optiken erschweren aufgrund der asymmetrischen Anordnung optischer Elemente sowie dem zusätzlich zu justierenden Freiheitsgrad die Realisierbarkeit einer thermisch und mechanisch robusten Struktur weiterhin.

Aufgabe der vorliegenden Erfindung ist daher die Bereitstellung einer verbesserten Stützstruktur und eines verbesserten Spiegelteleskops, welche eine besonders hohe thermische und mechanische Robustheit realisieren.

Diese Aufgabe wird durch eine Stützstruktur und ein Spiegelteleskop gemäß den Merkmalen der unabhängigen Ansprüche gelöst. Vorteilhafte Ausführungsformen und Weiterbildungen sind den Unteransprüchen und der nachfolgenden Beschreibung zu entnehmen.

Es wird vorgeschlagen, eine Stützstruktur für ein optisches Spiegelteleskop bereitzustellen. Die Stützstruktur umfasst einen Strahleneintritt, eine Primärhalterung für einen Primärspiegel, eine Sekundärhalterung für einen Sekundärspiegel, Streben, welche zwischen der Primärhalterung und der Sekundärhalterung verlaufen, und einen Strahlenaustritt. Die Stützstruktur weist die Kontur eines einschaligen Hyperboloids auf. Die Stützstruktur kann auch die Kontur von mehr als einem einschaligen Hyperboloid aufweisen. Ein einschaliges Hyperboloid ist im einfachsten Fall eine Fläche, die durch Rotation einer Gerade um die Achse des Hyperboloids entsteht. Das Hyperboloid kann eine geschlossene oder eine offene bzw. segmentierte Struktur aufweisen. Entsprechend der Parametrierung eines einschaligen Hyperboloids weisen alle Abschnitte entlang dieser tangentialen Geraden exakt die gleiche Länge auf. Sofern die Stützstruktur an ihren Enden nicht anderweitig zugeschnitten wird, weisen somit auch ihre Streben im Wesentlichen die gleiche Länge auf, und können Segmente oder Fasern eines beliebigen Werkstoffs, bevorzugt Verbundwerkstoffes sein. Im Wesentlichen gleiche Länge bedeutet Abweichungen der Längen verschiedener Streben von weniger als 10 %, weiter bevorzugt weniger als 5 %.

Die Primärhalterung, die Sekundärhalterung und die Streben können ausgebildet sein, um den Primärspiegel und den Sekundärspiegel in einer Weise zu tragen, dass zumindest die optische Achse eines der Spiegel von seiner geometrischen Achse abweicht. Vorteilhafterweise ist dies der Primärspiegel. Die Primärhalterung, die Sekundärhalterung und die Streben können auch ausgebildet sein, um den Primärspiegel und den Sekundärspiegel so zu tragen, dass beide optischen Achsen der beiden Spiegel von ihrer jeweiligen geometrischen Achse abweichen.

Die Primärhalterung, die Sekundärhalterung und die Streben sind weiterhin ausgebildet, um den Primärspiegel und den Sekundärspiegel in einer Weise zu tragen, dass ein z-förmiger Strahlengang zwischen dem Strahleneintritt, dem Primärspiegel, dem Sekundärspiegel und dem Strahlenaustritt erreicht wird. Strahleneintritt und Strahlenaustritt sind die Orte, an denen die Strahlen, z. B. Lichtstrahlen in die Stützstruktur eintreten bzw. sie wieder verlassen. Der Strahleneintritt und der Strahlenaustritt sind beliebig vertauschbar.

Auf diese Weise wird eine Stützstruktur und ein Spiegelteleskop bereitgestellt, welches sich durch eine hohe thermische und mechanische Stabilität bzw. Robustheit auszeichnet und zugleich durch geeignete Strukturauslegung hochdynamische Richtbewegungen des Teleskopes im Schwerefeld der Erde zulässt, ohne die optische Qualität des Teleskopes signifikant zu verschlechtern. So wird z. B. eine hochdynamische Zieleinweisung, -verfolgung und -bekämpfung auch mit außeraxialen Spiegelteleskopen ermöglicht, woraus sich zahlreiche operationelle Vorteile ergeben.

In anderen Worten: Sind unabhängig von der geometrisch exzentrischen Spiegelanordnung (Off-Axis) alle Streben (in beliebiger Anzahl) stets gleich lang, werden bei gleichen Längenausdehnungskoeffizienten, gleichen Elastizitätsmoduln und gleichen Strebenquerschnitten auch stets symmetrische Eigenschaften bezüglich der Anbindungspunkte der Streben erreichbar. Die thermische oder mechanische Dehnung bzgl. E-Modul und Querschnitt gleichartiger Streben (z. B. durch ihr Eigengewicht im Schwerefeld der Erde oder durch Zentrifugalkräfte bei hohen Schwenkgeschwindigkeiten) bewirkt somit ausschließlich eine Fokusänderung des Teleskopes entlang des z-förmigen Strahlenganges, indem sich der Justagezustand der Teleskopspiegel zueinander in den übrigen fünf Freiheitsgraden mechanisch und thermisch invariant verhält.

Auf diese Weise wird eine Stützstruktur für ein optisches Off-Axis-Spiegelteleskop mit einer sowohl thermisch als auch strukturmechanisch höchstmöglichen passiven Robustheit erreicht.

Die vorliegende Erfindung ermöglicht weiterhin eine strukturmechanisch unkomplizierte Berechenbarkeit und somit Beherrschbarkeit der Stützstruktur bzw. des Teleskops, da keine gekrümmten oder gekröpften Streben oder Fasern erforderlich sind. Dadurch wird die Gefahr von Verwölbungen bzw. Verwerfungen auf ein Minimum beschränkt, was Voraussetzung für eine hohe optische Qualität bei großen Temperaturschwankungen und unter hohen Querbeschleunigungen ist.

Auch eine einfache thermische Beherrschbarkeit wird auf Grund der einachsigen linearen Ausdehnungskoeffizienten erreicht, da nur der thermische Längenausdehnungskoeffizient des Strukturwerkstoffes in einer Richtung relevant ist, d. h. in Längsrichtung der Strebe bzw. entlang der Faser.

Weiterhin bewirkt eine thermische Längenausdehnung gleichartiger Streben ausschließlich eine Fokusänderung des Teleskopes entlang des Winkels des z-förmigen Strahlenganges. In allen anderen Richtungen verhält sich die Struktur thermisch invariant, was zu weiteren fehlerminimierenden Eigenschaften führt.

Die Anzahl der Streben ist beliebig. Vorzugsweise werden zumindest drei oder vier Streben verwendet. Die Streben können jeweils im Wesentlichen koaxial zu Tangenten des Hyperboloids verlaufen.

Die Stützstruktur kann weiterhin mindestens eine Umlenkhalterung für einen Umlenkspiegel umfassen. Die Umlenkhalterung ist bevorzugt angeordnet, um den Strahlenverlauf am Strahlenein- und austritt entlang einer Tangente des Hyperboloids zu führen. Die Ein- bzw. Ausstrahlrichtung zwischen den Umlenkspiegeln erfolgt dann abschattungsfrei entlang der Tangente der hyperbolischen Stützstruktur, so dass bei einem schwenkbar gelagerten Teleskop kein Durchbruch der Strukturwand im Bereich der Schwenkachse erforderlich wird und ebenfalls entsprechend der mechanischen und thermischen Längsdehnung die bestmögliche Fehlerneutralisation erreichbar wird. Die Schwenkachse kann dadurch stets an die strukturmechanisch optimale Position gelegt werden, was zugleich eine wesentliche Voraussetzung zur Minimierung optischer Fehler bei höchster Richtdynamik darstellt.

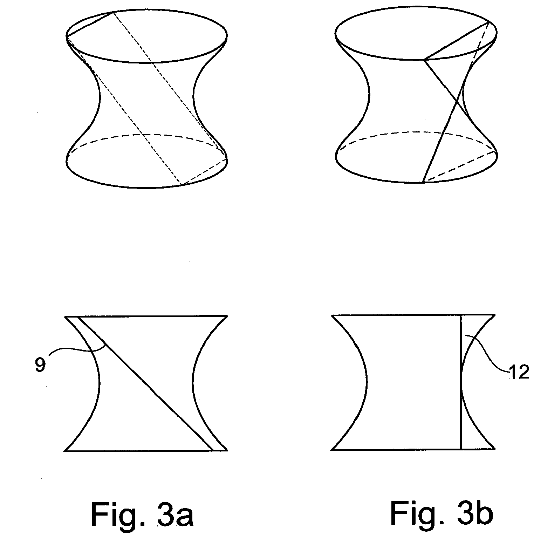

Die Stützstruktur kann weiterhin mindestens eine Feinrichthalterung für einen Feinrichtspiegel umfassen. Die Feinrichthalterung ist bevorzugt so angeordnet, dass eine optische Achse des Feinrichtspiegels im Wesentlichen auf einer ersten Schnittebene 12 (siehe Fig. 3b) des Hyperboloids oder parallel zu dieser liegt, wobei diese erste Schnittebene durch zwei sich schneidende Geraden erzeugt wird, wovon jede dieser Geraden durch Rotation das einschalige Hyperboloid erzeugt.

Die Feinrichthalterung ist weiter bevorzugt so angeordnet, dass der Feinrichtspiegel parallel zur Ein- bzw. Ausstrahlrichtung liegen kann und parallel zur der oben erläuterten ersten Schnittebene des Hyperboloids liegen muss. Parallel zu dieser ersten Schnittebene ist eine optimale Position auffindbar, die optischen Fehler aufgrund von Strukturdeformationen unter Beschleunigungskräften bestmöglich neutralisiert. Auf diese Weise wird eine tangentiale Einstrahlrichtung erreicht, wodurch optische Fehler aufgrund von Strukturdeformationen unter Beschleunigungskräften bestmöglich neutralisiert werden.

Es wird weiterhin vorgeschlagen, ein optisches Spiegelteleskop bereitzustellen. Es umfasst einen Primärspiegel, einen Sekundärspiegel und die Stützstruktur. Die Stützstruktur umfasst wiederum einen Strahleneintritt, eine Primärhalterung für den Primärspiegel, eine Sekundärhalterung für den Sekundärspiegel, Streben, welche zwischen der Primärhalterung und der Sekundärhalterung verlaufen, und einen Strahlenaustritt.

Die Primärhalterung, die Sekundärhalterung und die Streben können ausgebildet sein, um den Primärspiegel und den Sekundärspiegel in einer Weise zu tragen, dass zumindest die optische Achse eines der Spiegel von seiner geometrischen Achse abweicht. Die Primärhalterung, die Sekundärhalterung und die Streben sind ausgebildet, um den Primärspiegel und den Sekundärspiegel in einer Weise zu tragen, dass ein z-förmiger Strahlengang zwischen dem Strahleneintritt, dem Primärspiegel, dem Sekundärspiegel und dem Strahlenaustritt erreicht wird.

Die Stützstruktur weist die Kontur eines einschaligen Hyperboloids auf. Die Streben weisen im Wesentlichen die gleiche Länge auf.

Im Ergebnis erhält das Spiegelteleskop strukturmechanisch fehlerminimierende Eigenschaften. So wird es z. B. möglich, dass trotz asymmetrischer Anordnung der Spiegelmassen im Falle einer kardanischen Aufhängung entlang der Hauptträgheitsachse des Teleskopes bei Schwenkbeschleunigung in Azimut und Elevation keine Torsionsmomente innerhalb der Stützstruktur entstehen.

Die einfache und vorzugsweise gerade Strebengeometrie gestattet weiterhin die Verwendbarkeit von Normprofilen. In Analogie ist eine geschlossene Struktur vorteilhaft aus faserverstärkten Verbundwerkstoffen mit geraden, tangential gespannten Fasern exakt gleicher Länge herstellbar, woraus zugleich die Möglichkeit der Herstellung von Sandwich-Strukturen beziehungsweise beliebiger Kombinationen aus diesen Möglichkeiten resultieren.

Bevorzugt sind die Endpunkte der Streben bzw. die Anbindungspunkte der hyperbolischen Stützstruktur im Wesentlichen symmetrisch zu den geometrischen Achsen des Primärspiegels und des Sekundärspiegels samt ihren Halterungen angeordnet. Auf diese Weise lassen sich strukturmechanisch weitgehend orthotrope oder zumindest nicht anisotrope Eigenschaften realisieren.

Die Stützstruktur ist so ausgebildet, dass ein Abschnitt des z-förmigen Strahlengangs im Wesentlichen parallel zu einer zweiten Schnittebene des Hyperboloids verläuft. Die zweite Schnittebene 9 (siehe Fig. 3a) wird durch zwei parallele Geraden aufgespannt, wovon jede dieser zwei parallelen Geraden durch Rotation das einschalige Hyperboloid erzeugt. Auf diese Weise erhält das Teleskop thermisch fehlerminimierende Eigenschaften.

Des Weiteren ist die Stützstruktur so ausgebildet, dass die zweite Schnittebene des Hyperboloids im Wesentlichen auf einer Hauptträgheitsachse des Spiegelteleskops verläuft, wodurch das Spiegelteleskop strukturmechanisch fehlerminimierende Eigenschaften erhält. Auch verläuft eine geometrische Verbindungslinie des Primärspiegels und des Sekundärspiegels im Wesentlichen auf der Hauptträgheitsachse des Spiegelteleskops. So wird es z. B. möglich, dass trotz asymmetrischer Anordnung der Spiegelmassen im Falle einer kardanischen Aufhängung entlang der Hauptträgheitsachse des Teleskopes bei gleichzeitiger Schwenkbeschleunigung in Azimut und Elevation keine Torsionsmomente innerhalb der Stützstruktur entstehen.

Sowohl zur zusätzlichen Querversteifung des Teleskopes als auch zur Bereitstellung von Schnittstellen zur Anbindung des Teleskopes und optischer und mechatronischer Systeme und Komponenten können unter strukturmechanischen Gesichtspunkten weitere Streben- oder Verbindungselemente in abweichender Länge und Anordnung hinzugefügt werden, sofern ihre Anbindungspunkte so gewählt werden, dass das zuvor beschriebene Grundprinzip der thermischen und mechanischen Robustheit dadurch nicht verletzt wird.

Zusätzlich ist eine schwenkbare Aufhängung des Teleskopes mit vor- bzw. nachgeschaltetem Coudé-Strahlengang möglich, ohne dass die Stützstruktur zur Ein- oder Ausspiegelung unterbrochen werden muss. Auf diese Weise wird eine optimale Positionierbarkeit der Schwenkachse unter strukturmechanischen Aspekten erreicht und bzgl. der Teleskopschwenkachse ist eine thermische und mechanische Symmetrie der Stützstruktur realisierbar.

Weiterhin resultiert daraus die Möglichkeit einer verspannungsfreien Anbindung der hyperbolischen Stützstruktur an optimaler Position innerhalb einer beliebigen äußeren Hüllstruktur zum Schutz gegenüber der Umwelt, wobei unter thermischen Aspekten die optimale Festanbindung zwischen beiden Strukturen in der Ebene erfolgt, die senkrecht zur Achse des Teleskopes stehend mit der Teleskopschwenkachse zusammenfällt.

Zusätzlich besteht eine Möglichkeit für einen Einbau einer Einrichtung zur Fokusverstellung im Wesentlichen entlang der zweiten Schnittebene des Hyperboloids. Die Möglichkeit zur Einbindung einer Einrichtung zur Spiegelfeinjustage in Analogie zu klassischen On-Axis-Teleskopen besteht in unveränderter Weise.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen gleiche Bezugszeichen für gleiche oder ähnliche Objekte.

Nachfolgend wird anhand der beigefügten Zeichnungen näher auf Ausführungsbeispiele der Erfindung eingegangen. Es zeigen:
- **Fig. 1**: zeigt eine schematische Darstellung einer Spiegelanordnung und eines Strahlengangs durch ein optisches Off-Axis-Spiegelteleskop.
- **Figs. 2a und b**: zeigen schematische Darstellungen einer geschlossenen hyperbolischen Off-Axis-Teleskopstruktur.
- **Figs. 3a und b**: zeigen schematisch zweit Schnittebenen, die durch zwei Geraden aufgespannt werden, wovon jede dieser Geraden durch Rotation das einschalige Hyperboloid erzeugt.
- **Figs. 4a und b**: zeigen schematische Darstellungen einer offenen bzw. segmentierten hyperbolischen Off-Axis-Teleskopstruktur.

Optische Spiegelteleskope lassen sich prinzipiell entweder als "axiale" oder "außeraxiale Optik", auch "On-Axis-" oder "Off-Axis-Optik" genannt, realisieren. Bei On-Axis-Optiken (wie beispielsweise Newton-, Cassegrain- oder Nasmynth-Teleskopen) liegen die optischen Achsen der optischen Komponenten koaxial zu deren geometrischen Achse und somit auch zu jener des Teleskopaufbaues. Ein Nachteil von "On-Axis-Spiegelteleskopen" ist jedoch der auf dem Hauptspiegel entstehende Abschattungsbereich durch den zentrisch aufgehängten Fangspiegel selbst. Zum Beispiel beim Cassegrain-Teleskop lässt sich dieser Bereich in Form einer Aussparung in der Mitte des Hauptspiegels zwar zur Einspiegelung nutzen, dennoch erhöht sich der erforderliche Teleskopdurchmesser bezogen auf die erreichbare optischer Apertur genau um diesen Betrag. Insbesondere bei Sendeteleskopen wird dieser Zustand zusätzlich dadurch verschlimmert, dass die Abschattung genau im Bereich der maximalen Intensität des austretenden Lichtbündels erfolgen würde.

Sogenannte Off-Axis-Optiken bieten diesbezüglich einen alternativen Ansatz. Sofern die ausgeschnittenen Flächen der Off-AxisKomponenten vollständig neben der optischen Achse (bezogen auf ihrer mathematische Ausgangsfunktion der Oberfläche) liegen, lassen sich diese asymmetrisch so anordnen, dass durch entweder ebene oder räumliche z-förmige Strahlenverläufe gegenseitige Abschattungen der optischen Komponenten untereinander vermieden werden.

Bei Spiegelteleskopen resultiert daraus einerseits der Vorteil, dass der Sekundärspiegel samt seiner Aufhängung (und eventueller Zusatz- und Versorgungseinrichtungen zur Justage und Fokusverstellung) nicht mehr im Bereich der Aus- oder Eintrittsapertur des Teleskopes angeordnet sein müssen. Im Gegensatz zu On-Axis-Optiken wird somit die vollständige Primärspiegelfläche auch ohne vorgeschaltete optische Zusatzeinrichtungen abschattungsfrei nutzbar, was besonders bei Hochleistungs-Sendeteleskopen entscheidende Vorteile bzgl. Vermeidung von Streulicht bietet.

Andererseits steigen hierdurch die Anforderungen an die Teleskopstruktur in zweierlei Hinsicht: Erstens muss die Off-Axis-Teleskopoptik in allen sechs Freiheiten justiert und anschließend thermisch und mechanisch robust gehalten werden (bei On-Axis-Optiken gibt es nur fünf Freiheitsgrade, da sich ihre Komponenten bezüglich einer Rotation um ihre optische Achse invariant verhalten). Zweitens sind aufgrund der geometrisch asymmetrischen Anordnung der optischen Komponenten bzgl. der Teleskopachse (wo geometrische und optische Achsen weit auseinander liegen) im Gegensatz zu den On-Axis-Optiken keine fehlerneutralisierenden oder -halbierenden Eigenschaften mehr gegeben.

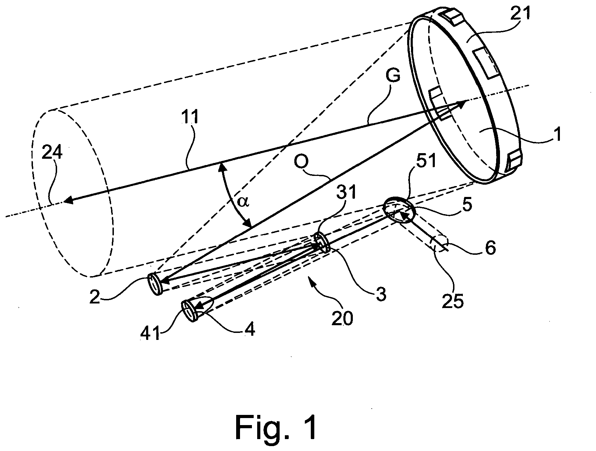

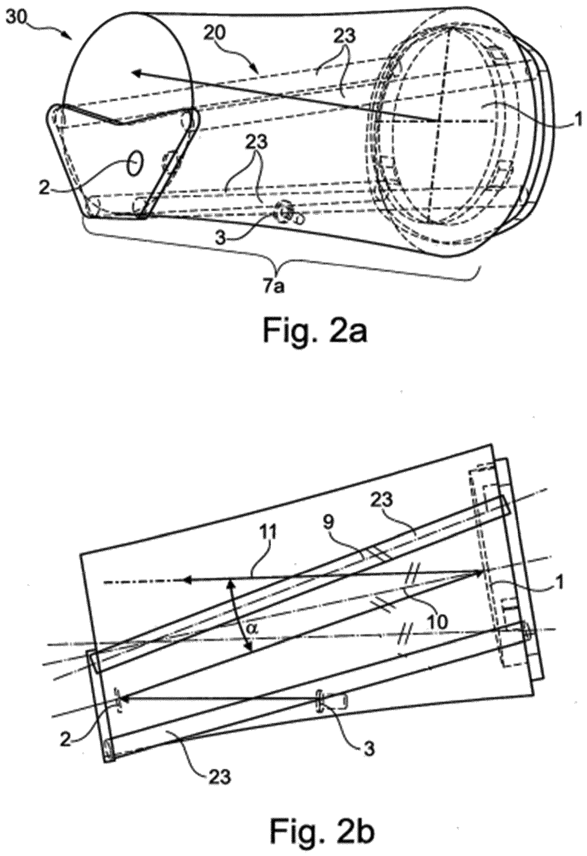

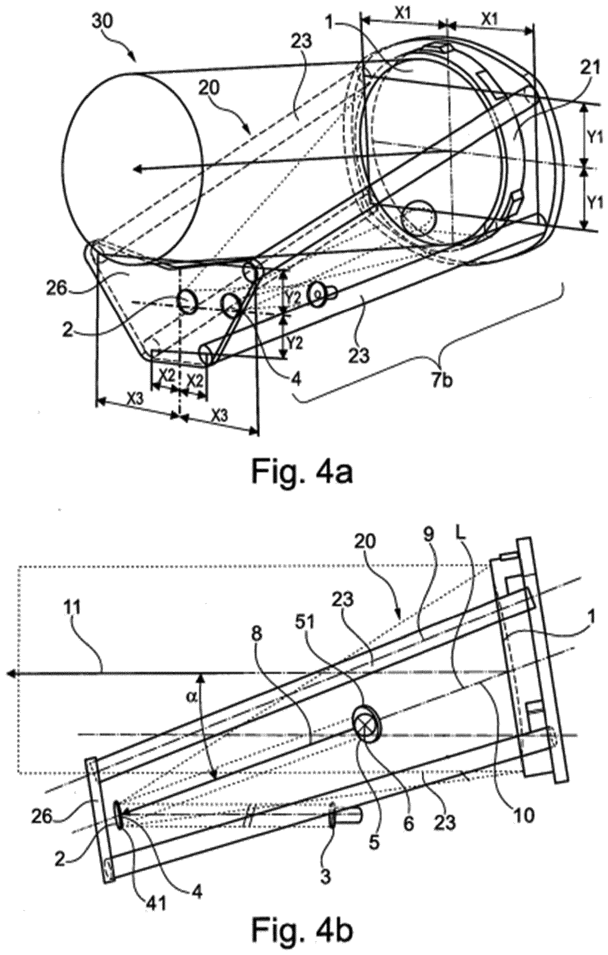

**Fig. 1** zeigt eine schematische Darstellung einer Spiegelanordnung und eines Strahlengangs durch ein optisches Off-Axis-Spiegelteleskop. Das Spiegelteleskop 30 ist in den **Figs. 2** **und** **4** gezeigt. Es umfasst einen Primärspiegel 1, einen Sekundärspiegel 2 und eine Stützstruktur 20. Die Stützstruktur 20 umfasst wiederum einen Strahlenein- oder austritt 24, eine Primärhalterung 21 für den Primärspiegel 1, eine Sekundärhalterung 22 für den Sekundärspiegel 2, Streben 23, welche zwischen der Primärhalterung 21 und der Sekundärhalterung 22 verlaufen, einen Strahlenaus- oder eintritt 25 und eine Aus- oder Einspiegelung 6. Der Strahleneintritt 24 und der Strahlenaustritt 25 sind beliebig vertauschbar, sodass es sich um Sende- oder Empfangsteleskope handeln kann.

Die Primärhalterung 21, die Sekundärhalterung 22 und die Streben 23 tragen den Primärspiegel 1 und den Sekundärspiegel 2 in einer Weise, dass die Strahlrichtung O zwischen den Spiegeln 1, 2 von der Teleskopachse bzw. Aus- oder Einstrahlrichtung abweicht. Die Primärhalterung 21, die Sekundärhalterung 22 und die Streben 23 tragen den Primärspiegel 1 und den Sekundärspiegel 2 weiterhin in einer Weise, dass ein z-förmiger Strahlengang 11 zwischen dem Strahleneintritt 24, dem Primärspiegel 1, dem Sekundärspiegel 2 und dem Strahlenaustritt 25 erreicht wird. Die Pfeilrichtung des Strahlengangs 11 gibt die Blickrichtung eines Benutzers oder die Richtung eines ausgesendeten Strahls wieder. Strahleneintritt und Strahlenaustritt sind die Orte, an denen die Strahlen, z.B. Lichtstrahlen in das Spiegelteleskop 30 eintreten bzw. es wieder verlassen.

Die Stützstruktur 20 umfasst weiterhin zwei Umlenkspiegel 4, 5 und ihre Umlenkhalterungen 41, 51. Auch die Umlenkspiegel 4, 5 liegen im Strahlengang 11. Die Stützstruktur 20 umfasst weiterhin einen integrierten Feinrichtspiegel 3 und eine Feinrichthalterung 31. Der Feinrichtspiegel 3 liegt ebenfalls im Strahlengang 11.

**Figs. 2a** **und b** zeigen schematische Darstellungen einer geschlossenen hyperbolischen Off-Axis-Teleskopstruktur. Die Stützstruktur 20 weist die Kontur eines geschlossenen einschaligen Hyperboloids 7a auf. Das Spiegelteleskop 30 umfasst unter anderem den Primärspiegel 1, den Sekundärspiegel 2, den Feinrichtspiegel 3 und ggf. zusätzliche Streben 23 der Stützstruktur 20. Diese zusätzlichen geraden Streben verlaufen in diesem Fall entlang der Tangenten des geschlossenen Hyperboloids zwischen den Spiegeln 1, 2 und weisen im Wesentlichen die gleiche Länge auf. Das Spiegelteleskop 30 weist eine Rotationsachse 10 der geschlossenen Hyberboloidschale und einen z-förmigen Strahlengang 11 (Fig. 2b) auf. Der z-förmiger Strahlengang 11 (Fig. 2b) verläuft zwischen dem Strahlein- bzw. Austritt der großen Apertur, dem Primärspiegel 1, dem Sekundärspiegel 2 und dem Feinrichtspiegel 3.

Zwischen zwei Abschnitten bzw. Schenkeln des Strahlengangs 11 liegt ein Winkel α. Ein Abschnitt des z-förmigen Strahlengangs 11 verläuft im Wesentlichen parallel zu einer zweiten Schnittebene 9 des Hyperboloids 7. Wie in der **Fig. 3a** gezeigt, wird diese zweite Schnittebene 9 durch zwei parallele Geraden aufgespannt, wovon jede dieser zwei parallelen Geraden durch Rotation das einschalige Hyperboloid erzeugt. Auf diese Weise erhält der gesamte Teleskopaufbau zusätzlich fehlerminimierende Eigenschaften, d.h. gleiche Verformungsgrößen der Stützstruktur haben nur minimale negative optische Auswirkungen.

**Figs. 4a** **und b** zeigen schematische Darstellungen einer offenen bzw. segmentierten hyperbolischen Off-Axis-Teleskopstruktur. Die Stützstruktur 20 umfasst in diesem Fall Streben 23, welche tangential am Hyperboloid 7a verlaufen. Die Stützstruktur 20 weist einen z-förmigen Strahlengang 11 (Fig. 4b) auf und umfasst unter anderem den Primärspiegel 1, den Sekundärspiegel 2, den Feinrichtspiegel 3, die Umlenkspiegel 4, 5, die Einspiegelung 6 und Streben 23. Umlenkhalterungen 41, 51 bzw. Umlenkspiegel 4, 5 sind so angeordnet, dass sie den Strahlenein- und/oder -austritt entlang einer Tangente 8 des Hyperboloids führen. Eine geometrische Verbindungslinie L des Primärspiegels 1 und des Sekundärspiegels 2 verläuft im Wesentlichen auf einer Hauptträgheitsachse 10 des Spiegelteleskops 30 bzw. mit geringem Abstand parallel zu dieser.

Die geraden Streben 23 verlaufen zwischen den Spiegeln 1, 2 und weisen im Wesentlichen die gleichen Längen auf. In anderen Worten, unabhängig von der geometrisch exzentrischen Spiegelanordnung (Off-Axis) sind alle Streben (in beliebiger Anzahl) stets gleich lang und sind symmetrisch zu den geometrischen Achsen der Spiegel 1 und 2 samt ihren Halterungen 21 und 22 angeordnet, so dass in Verbindung mit gleichen Längenausdehnungskoeffizienten und gleichen Elastizitätsmoduln dieser Streben 23 auch stets symmetrische Eigenschaften bezüglich der Anbindung der Spiegel 1, 2 erreichbar werden. Die thermische oder mechanische Längsdehnung gleichartiger Streben 23 (z. B. durch ihr Eigengewicht im Schwerefeld der Erde oder durch Zentrifugalkräfte bei hohen Schwenkgeschwindigkeiten) bewirkt somit ausschließlich eine Fokusänderung zwischen den Spiegeln 1 und 2 entlang des z-förmigen Strahlenganges 11, wobei sich der Justagezustand der Teleskopspiegel 1 und 2 zueinander in den übrigen fünf Freiheitsgraden mechanisch und thermisch invariant verhält.

Die Streben 23 verlaufen jeweils im Wesentlichen koaxial zu Tangenten 8 des Hyperboloids 7a. Die Endpunkte der Streben 23 bzw. die Anbindungspunkte der hyperbolischen Stützstruktur 20 an z.B. eine Endplatte 26 oder die Primärhalterung 21 sind im Wesentlichen symmetrisch (X1, X2, X3, Y1, Y2) zu den geometrischen Achsen des Primärspiegels 1 und des Sekundärspiegels 2 samt ihren Halterungen 21 und 22 angeordnet. Auf diese Weise lassen sich strukturmechanisch weitgehend orthotrope Eigenschaften realisieren.

Die hyperbolische Stützstruktur 20 ist so ausgeführt, dass eine geometrische Verbindungslinie L des Primärspiegels 1 und des Sekundärspiegels 2 im Wesentlichen auf einer Hauptträgheitsachse 10 des Spiegelteleskops 30 verläuft bzw. mit geringem Abstand parallel zu dieser verläuft. Die Hauptträgheitsachse 10 liegt auf der zweiten Schnittebene 9. Die zweite Schnittebene 9 wird durch zwei parallele Geraden erzeugt wird, wovon jede dieser Geraden durch Rotation das einschalige Hyperboloid erzeugt. So wird es z. B. möglich, dass trotz asymmetrischer Anordnung der Spiegelmassen im Falle einer kardanischen Aufhängung entlang der Hauptträgheitsachse 10 des Teleskopes 30 bei gleichzeitiger Schwenkbeschleunigung in Azimut und Elevation keine Torsionsmomente innerhalb der Stützstruktur 20 entstehen.

Ein Abschnitt des z-förmigen Strahlengangs 11 verläuft im Wesentlichen parallel zu einer zweiten Schnittebene 9 des Hyperboloids 7b. Die Umlenkspiegel 4, 5 bzw. ihre Umlenkhalterungen 41, 51 sind so angeordnet, dass sie einen Abschnitt des Strahlengangs 11 entlang einer Tangente 8 des Hyperboloids 7b führen. Die Ein- bzw. Ausstrahlrichtung zwischen den Umlenkspiegeln 4, 5 erfolgt abschattungsfrei entlang der Tangente 8 der hyperbolischen Stützstruktur 20, so dass bei einem schwenkbar gelagerten Teleskop 30 mit vor- bzw. nachgeschaltetem Coudé-Strahlengang kein Durchbruch der Strukturwand im Bereich der Schwenkachse erforderlich wird. Die Schwenkachse kann dadurch stets an die strukturmechanisch optimale Position gelegt werden, was zugleich eine wesentliche Voraussetzung zur Minimierung optischer Fehler bei höchster Richtdynamik darstellt.

Der Feinrichtspiegel 3 ist im Wesentlichen auf der oder parallel zu einer ersten Schnittebene 11 der hyperbolischen Stützstruktur 7 angeordnet. Wie in der Fig. 3b gezeigt, wird diese erste Schnittebene 11 durch zwei sich schneidende Geraden erzeugt, wovon jede dieser Geraden durch Rotation das einschalige Hyperboloid erzeugt. Auf dieser Ebene lässt sich die optimale Position des Feinrichtspiegels 3 finden, die optische Fehler aufgrund von Strukturdeformationen unter Querbeschleunigungskräften bestmöglich neutralisieren.

## Patentansprüche

1. Ein optisches Spiegelteleskop (30), umfassend
- einen Primärspiegel (1),
- einen Sekundärspiegel (2), und
- eine Stützstruktur (20), umfassend
- einen Strahleneintritt (24),
- eine Primärhalterung (21) für den Primärspiegel (1),
- eine Sekundärhalterung (22) für den Sekundärspiegel (2),
- Streben (23), welche zwischen der Primärhalterung (21) und der Sekundärhalterung (22) verlaufen, und
- einen Strahlenaustritt (25),
wobei die optische Achse des Primärspiegels (1) oder des Sekundärspiegels (2) von seiner geometrischen Achse abweicht,
wobei die Stützstruktur (20) die Kontur eines einschaligen Hyperboloids (7) aufweist, das eine erste Schnittebene (12) und eine zweite Schnittebene (9) besitzt, wobei die zweite Schnittebene 9 durch zwei parallele Geraden aufgespannt wird, wovon jede dieser zwei parallelen Geraden durch Rotation das einschalige Hyperboloid erzeugt, und wobei
die Primärhalterung (21), die Sekundärhalterung (22) und die Streben (23) ausgebildet sind, um den Primärspiegel (1) und den Sekundärspiegel (2) in einer Weise zu tragen, dass ein z-förmiger Strahlengang (11) zwischen dem Strahleneintritt (24), dem Primärspiegel (1), dem Sekundärspiegel (2) und dem Strahlenaustritt (25) erreicht wird, und
wobei die Streben (23) die gleiche Länge aufweisen,
wobei die Stützstruktur (20) so ausgebildet ist, dass die zweite Schnittebene (9) des Hyperboloids (7) auf einer Hauptträgheitsachse (10) des Spiegelteleskops (30) verläuft,
eine geometrische Verbindungslinie L des Primärspiegels (1) und des Sekundärspiegels (2) auf einer Hauptträgheitsachse (10) des Spiegelteleskops (30) verläuft, und
ein Abschnitt des z-förmigen Strahlengangs (11) parallel zu der zweiten Schnittebene (9) des Hyperboloids (7) verläuft.

2. Spiegelteleskop (30) nach Anspruch 1, wobei das Hyperboloid (7) auf der Rotation einer Gerade beruht und eine geschlossene oder eine segmentierte Struktur (7a; 7b) aufweist.

3. Spiegelteleskop (30) nach einem der vorherigen Ansprüche, wobei die Streben (23) jeweils koaxial zu Tangenten (8) des Hyperboloids (7) verlaufen.

4. Spiegelteleskop (30) nach einem der vorherigen Ansprüche, weiter umfassend mindestens eine Umlenkhalterung (41, 51) für einen Umlenkspiegel (4, 5), welche angeordnet ist, um zumindest einen Abschnitt des Strahlengangs (11) entlang einer Tangente (8) des Hyperboloids (7) zu führen.

5. Spiegelteleskop (30) nach einem der vorherigen Ansprüche, weiter umfassend eine Feinrichthalterung (31) für einen Feinrichtspiegel (3), welche so angeordnet ist, dass die optische Achse des Feinrichtspiegels (3) auf der ersten Schnittebene (12) des Hyperboloids (7) liegt, wobei die erste Schnittebene (12) durch zwei sich schneidende Geraden erzeugt wird, wovon jede dieser Geraden durch Rotation das einschalige Hyperboloid (7) erzeugt.

6. Spiegelteleskop (30) nach dem vorherigen Anspruch, wobei die Endpunkte der Streben (23) symmetrisch zu den geometrischen Achsen des Primärspiegels (1) und des Sekundärspiegels (2) angeordnet sind.

## Claims

1. An optical mirror telescope (30), comprising
- a primary mirror (1),
- a secondary mirror (2), and
- a support structure (20), comprising
- a beam inlet (24),
- a primary mounting (21) for the primary mirror (1),
- a secondary mounting (22) for the secondary mirror (2),
- struts (23) which extend between the primary mounting (21) and the secondary mounting (22), and
- a beam outlet (25),
wherein the optical axis of the primary mirror (1) or of the secondary mirror (2) differs from the geometric axis thereof,
wherein the support structure (20) has the contour of a hyperboloid of one sheet (7), which has a first sectional plane (12) and a second sectional plane (9), the second sectional plane 9 being spanned by two parallel straight lines, each of these two parallel straight lines generating the hyperboloid of one sheet by rotation, and wherein
the primary mounting (21), the secondary mounting (22) and
the struts (23) are configured so as to carry the primary mirror (1) and the secondary mirror (2) in such a way that a z-shaped beam path (11) between the beam inlet (24), the primary mirror (1), the secondary mirror (2) and the beam outlet (25) is achieved, and
wherein the struts (23) are of the same length,
wherein the support structure (20) is configured in such a way that the second sectional plane (9) of the hyperboloid (7) extends on a principal axis of inertia (10) of the mirror telescope (30),
a geometric connecting line L of the primary mirror (1) and the secondary mirror (2) extends on a principal axis of inertia (10) of the mirror telescope (30), and
a portion of the z-shaped beam path (11) extends parallel to the second sectional plane (9) of the hyperboloid (7).

2. Mirror telescope (30) according to claim 1, wherein the hyperboloid (7) is based on rotation of a straight line and has a closed or segmented structure (7a; 7b).

3. Mirror telescope (30) according to any of the preceding claims, wherein the struts (23) each extend coaxial to tangents (8) to the hyperboloid (7).

4. Mirror telescope (30) according to any of the preceding claims, further comprising at least one deflection mounting (41, 51) for a deflection mirror (4, 5), said mounting being arranged to guide at least a portion of the beam path (11) along a tangent (8) of the hyperboloid (7).

5. Mirror telescope (30) according to any of the preceding claims, further comprising a precision orientation mounting (31) for a precision orientation mirror (3), which is arranged in such a way that the optical axis of the precision orientation mirror (3) is positioned on the first sectional plane (12) of the hyperboloid (7), the first sectional plane (12) being generated by two mutually intersecting straight lines, each of these straight lines generating the hyperboloid of one sheet (7) by rotation.

6. Mirror telescope (30) according to the preceding claim, wherein the end points of the struts (23) are arranged symmetrically about the geometric axes of the primary mirror (1) and of the secondary mirror (2).

## Revendications

1. Télescope à miroir optique (30), comprenant
- un miroir primaire (1),
- un miroir secondaire (2) et
- une structure porteuse (20), comprenant
- une entrée de faisceau (24),
- un support primaire (21) pour le miroir primaire (1),
- un support secondaire (22) pour le miroir secondaire (2),
- des entretoises (23) qui s'étendent entre le support primaire (21) et le support secondaire (22), et
- une sortie de faisceau (25),
dans lequel l'axe optique du miroir primaire (1) ou du miroir secondaire (2) diffère de son axe géométrique,
dans lequel la structure porteuse (20) présente le contour d'un hyperboloïde à une nappe (7) qui possède un premier plan de coupe (12) et un deuxième plan de coupe (9), le deuxième plan de coupe (9) étant défini par deux droites parallèles, chacune de ces deux droites parallèles produisant l'hyperboloïde à une nappe par rotation, et
dans lequel le support primaire (21), le support secondaire (22) et les entretoises (23) sont conçus pour porter le miroir primaire (1) et le miroir secondaire (2) de telle sorte qu'un trajet de faisceau en forme de z (11) est obtenu entre l'entrée de faisceau (24), le miroir primaire (1), le miroir secondaire (2) et la sortie de faisceau (25), et
dans lequel les entretoises (23) présentent la même longueur,
dans lequel la structure porteuse (20) est conçue de telle sorte que le deuxième plan de coupe (9) de l'hyperboloïde (7) s'étend sur un axe d'inertie principal (10) du télescope à miroir (30),
une ligne de liaison géométrique L du miroir primaire (1) et du miroir secondaire (2) s'étend sur un axe d'inertie principal (10) du télescope à miroir (30), et
une partie du trajet de faisceau en forme de z (11) s'étend parallèlement au deuxième plan de coupe (9) de l'hyperboloïde (7).

2. Télescope à miroir (30) selon la revendication 1, dans lequel l'hyperboloïde (7) est basé sur la rotation d'une droite et présente une structure fermée ou segmentée (7a ; 7b) .

3. Télescope à miroir (30) selon l'une des revendications précédentes, dans lequel les entretoises (23) sont respectivement coaxiales à des tangentes (8) à l'hyperboloïde (7).

4. Télescope à miroir (30) selon l'une des revendications précédentes, comprenant en outre au moins un support de déviation (41, 51) pour un miroir de déviation (4, 5) qui est disposé pour guider au moins une partie du trajet de faisceau (11) le long d'une tangente (8) à l'hyperboloïde (7).

5. Télescope à miroir (30) selon l'une des revendications précédentes, comprenant en outre un support d'orientation fine (31) pour un miroir d'orientation fine (3) qui est disposé de telle sorte que l'axe optique du miroir d'orientation fine (3) se trouve sur le premier plan de coupe (12) de l'hyperboloïde (7), le premier plan de coupe (12) étant généré par deux droites qui se croisent, chacune de ces droites générant l'hyperboloïde à une nappe (7) par rotation.

6. Télescope à miroir (30) selon la revendication précédente, dans lequel les points d'extrémité des entretoises (23) sont disposés symétriquement par rapport aux axes géométriques du miroir primaire (1) et du miroir secondaire (2).
